Europäisches Patentamt

European Patent Office

Office européen des brevets

(19)

(11) Veröffentlichungsnummer: **0 084 337**

**A1**

(12) # EUROPÄISCHE PATENTANMELDUNG

(21) Anmeldenummer: **83100150.8**

(51) Int. Cl.³: **C 01 D 5/02**

(22) Anmeldetag: **11.01.83**

(30) Priorität: **15.01.82 DE 3201064**

(43) Veröffentlichungstag der Anmeldung:
**27.07.83 Patentblatt 83/30**

(84) Benannte Vertragsstaaten:
**BE DE FR GB**

(71) Anmelder: **HOECHST AKTIENGESELLSCHAFT**
**Postfach 80 03 20**
**D-6230 Frankfurt/Main 80(DE)**

(72) Erfinder: **Henke, Karl-Heinz, Dr.**
**Wilhelm-Roser-Weg 3**
**D-6230 Frankfurt am Main 80(DE)**

(72) Erfinder: **Karg, Manfred**
**An der Ziegelei 8**
**D-6233 Kelkheim (Taunus)(DE)**

(54) **Verfahren zur Herstellung von Natriumhydrogensulfat.**

(57) Natriumhydrogensulfat wird durch Eintragen von Natriumchlorid oder Natriumsulfat sowie Schwefelsäure in geschmolzenes Natriumhydrogensulfat hergestellt. Die Schmelze wird beheizt und in dem Maß, in dem sie sich bildet, aus dem Reaktionsgefäß abgezogen. Die Ausgangsprodukte müssen mindestens teilweise vor dem Eintragen in die Schmelze vorgewärmt werden.

EP 0 084 337 A1

HOECHST AKTIENGESELLSCHAFT HOE 82./F 006          **0084337**
Dr.SP/Wa

<u>Verfahren zur Herstellung von Natriumhydrogensulfat</u>

Gegenstand der Erfindung ist ein Verfahren zur kontinuierlichen Herstellung einer Natriumhydrogensulfat-Schmelze
ausgehend von Natriumchlorid oder Natriumsulfat sowie
Schwefelsäure, wobei die Ausgangsmaterialien mindestens
teilweise vorgewärmt werden.

Es ist bekannt, Natriumhydrogensulfat durch kontinuierliches Eintragen von Natriumchlorid oder Natriumsulfat
und technischer Schwefelsäure in einer Natriumhydrogensulfat-Schmelze herzustellen, die sich in gußeisernen
oder gemauerten Retorten befindet. Ein Teil der Schmelze
wird laufend abgezogen und durch Granulierung in eine
handelsübliche Form gebracht.

Die für die Herstellung der Natriumhydrogensulfatschmelze
erforderliche Wärmeenergie wird den gußeisernen Retorten
mittels Beheizung des Retortenbodens durch Verbrennen
gasförmiger, flüssiger oder fester Brennstoffe oder
auch durch ein Wärmeübertragungsöl bzw. elektrisch, z.B.
nach dem Tauchsiederprinzip, zugeführt. Bei Verwendung
von gemauerten Retorten erfolgt die Beheizung der
Schmelze in direkter Weise durch Tauchbrenner unter
Einsatz gasförmiger oder flüssiger Brennstoffe.

Die Durchsatzleistung der gußeisernen Retorten ist sehr
begrenzt, da der Wärmeübergang in die Schmelze durch den
Retortenboden gehen muß. Außerdem entstehen bei der
Produktion erhebliche Ausfallzeiten, weil die Retorten
wegen Korrosion durch die aggressive Schmelze nur eine
Lebensdauer von 1000 - 2000 Stunden haben und danach
ersetzt werden müssen.

Durch Verwendung ausgemauerter Retorten mit direkter
Tauchbrennerbeheizung wird der erwähnte Nachteil der gußeisernen Retorten vermieden, da diese eine Lebensdauer von mehreren Jahren haben und die spezifische Durchsatzleistung höher ist (DE-AS 26 19 811, DE-OS 28 10 693).

Bei beiden Verfahrensvarianten haben sich Reaktionstemperaturen von 190 bis 400°C, insbesondere von bis 300°C bewährt. Besonders günstig hinsichtlich einer Optimierung des Durchsatzes bei einer vorgegebenen Apparatur sind Temperaturen von 260 bis 300°C, die also mindestens 70°C über dem Schmelzpunkt des Reaktionsgemisches liegen. Es hat sich gezeigt, daß bei Temperaturen unter 280°C zunehmend das bei der Reaktion freigesetzte Chlorwasserstoffgas und die sich zersetzenden Verunreinigungen der Ausgangsstoffe die Schmelze so heftig zum Schäumen bringen, daß ein geordneter Produktionsablauf immer schwieriger wird und der Durchsatz pro Zeiteinheit immer weiter zurückgenommen werden muß.

Bei starker Schaumbildung werden Schaumteilchen , die Sulfat, Kochsalz und Säure enthalten, in die Abgasleitungen, Kühler und Abscheider gerissen, wo sie in kürzester Zeit erstarren. Beschädigungen der Apparaturen und langwierige Reinigungsarbeiten sind die Folge. Bei Verwendung sehr reiner Rohstoffe, wie z.B. Siedesalz, oder durch den Einsatz von speziellen Rührern zur Schaumzerstörung kann die Schaumbildung in gewissem Umfang vermindert werden. Auch eine Vergrößerung der Retorten zwecks Aufnahme eines größeren Schaumvolumens bringt eine Verbesserung.

Der Zusatz schaumzerstörender Chemikalien, wie z.B. "BAYER 7800 neu", ist zwar sehr effektiv, bringt aber soviel Verunreinigungen in den entwickelten Chlorwasserstoff, daß dieser für die übliche Weiterverarbeitung zu anderen chemisch reinen Produkten nicht mehr brauchbar

0084337

ist. Die genannten Maßnahmen verursachen aber bei nur mäßigem Erfolg eine beträchtliche Erhöhung der Kosten für Rohstoffe, Investitionen und Verschleiß.

Der vorliegenden Erfindung liegt nun die Aufgabe zugrunde, ein Verfahren zur Herstellung einer Natriumhydrogensulfatschmelze zu finden, bei dem die Schaumbildung im Reaktionsgefäß unterdrückt bzw. stark vermindert ist. Ein solches Verfahren sollte es auch erlauben die Durchsatzleistung in einem gegebenen Reaktor zu erhöhen und bei Bedarf die Reaktionstemperatur zu reduzieren.

Ein weiteres Ziel der Erfindung ist die Verwendung preiswerterer Rohstoffe und Materialien, wie Industriesalz (gebrochenes Steinsalz), ungereinigtes Natriumsulfat und Abfallschwefelsäure, die wegen ihres Gehaltes an schaumbildenden Verunreinigungen bei den bisher bekannten Verfahren zur Herstellung von Natriumhydrogensulfat nicht eingesetzt werden können. Besonders erwünscht ist die Verwendung sogenannter Entfallsalze, die z.B. bei der Produktion von Farbstoffen, Pharmazeutika und organischen Zwischenprodukten in großen Mengen als verunreinigtes Natriumsulfat und Natriumchlorid zwangsläufig anfallen.

Erfindungsgemäß wird diese Aufgabe dadurch gelöst, daß man die für die Herstellung der Natriumhydrogensulfatschmelze notwendigen Ausgangsmaterialien mindestens teilweise vorwärmt. Die Schwefelsäure kann auf Temperaturen bis 300°C, insbesondere 70 - 250°C, vorzugsweise 100 - 220°C vorgewärmt werden. Die eingesetzten Natriumsalze können auf Temperaturen bis ca. 1000°C, vorzugsweise von 50° bis knapp unter den Schmelzpunkt der Salze, insbesondere 70 - 600°C vorgewärmt werden. Besonders bevorzugt sind Temperaturen von 150 bis 400°C. Das Aufheizen der festen Materialien kann auf wirtschaftliche Weise z.B. mittels Wirbelbett-Trocknern oder
Sterntrocknern erfolgen.

Man kann die Schwefelsäure oder das eingesetzte Natriumsalz oder beides vorwärmen. Die besten Effekte zeigen
sich, wenn beide Ausgangsprodukte vorgewärmt werden.
Je höher die Vorwärm-Temperatur umso deutlicher der
beobachtete Effekt.

Wird beispielsweise die Schwefelsäure auf etwa 190°C
erwärmt, und erst dann dem Reaktionsgefäß zugeführt,
ist überraschenderweise die Schaumbildung über der Bisulfatschmelze stark reduziert, die Reaktionstemperatur
kann abgesenkt werden und dennoch die Durchsatzleistung
gleichzeitig um etwa 30 % gesteigert werden.

Die Vorwärmung der Schwefelsäure ist technisch problemlos.
Unter Verwendung von Wärmetauschern, die beispielsweise
aus Tantal oder emailliertem Stahl gefertigt sind und
mit hochgespanntem Dampf oder hocherhitztem Öl beaufschlagt werden, ist die gewünschte Temperatur der Schwefelsäure leicht zu erzielen. Eine besondere Ausführungsform
des erfindungsgemäßen Verfahrens ist dadurch gekennzeichnet, daß die eintretende Schwefelsäure mit der aus
dem Reaktor ablaufenden Natriumhydrogensulfat-Schmelze,
deren Temperatur meist beträchtlich über der Temperatur
des Schmelzpunktes liegt, auf die gewünschte Temperatur
vorgewärmt wird.
Dies führt zu einer gewissen Verbesserung der Energiebilanz des Verfahrens. Ein weiterer Vorteil zeigt sich
dann, wenn die Schmelze granuliert werden soll, da die
Aufheizung der Schwefelsäure mit einer Abkühlung der
Schmelze verknüpft ist.

Es ist bekannt, daß Natriumhydrogensulfat-Schmelzen beim

Überführen in den festen Zustand durch Abkühlung leicht dazu neigen, im amorphen, glasartigen Zustand zu erstarren. Dies muß bei der Granulierung in eine handelsübliche Form unbedingt vermieden werden, da bei der späteren Lagerung dieses metastabilen Produktes in Silos, Fässern oder Säcken sehr hartnäckige Verbackungen unter Freisetzung der erheblichen Kristallisationswärme auftreten.

Für die Aufgabe, die metastabile Form des Natriumhydrogensulfates in die stabile Form zu überführen, hat es sich als vorteilhaft gezeigt, die Temperatur der Schmelze vor der Granulierung möglichst tief (beispielsweise auf 186 – 236°C) einzustellen. In diesem Falle ist, bei sonst gleichen Bedingungen, die Abkühlungsgeschwindigkeit in °C pro Zeiteinheit geringer als wenn man eine Schmelze von 260 – 300°C auf die gleiche Endtemperatur abkühlt, so daß das Natriumhydrogensulfat größtenteils gleich in Form der stabilen Phase erstarrt. Möglichst tiefe, nur wenig über dem Schmelzpunkt liegende Temperaturen der Natriumhydrogensulfatschmelze in den Reaktoren, bzw. am Ausgang eines Wärmetauschers, sind somit für die Granulierung anzustreben.

Bei Einsatz eines Wärmetauschers und nachfolgender Granulation der Schmelze wird also der Übergang in die stabile, kristalline Phase beschleunigt.

Die Vorteile des erfindungsgemäßen Verfahrens sind aus den Beispielen ersichtlich: Die Kapazität der Reaktoren kann nahezu verdoppelt werden und der spezifische Energiebedarf wird bei Einsatz eines Wärmetauschers deutlich verringert.

Beispiel 1

In einem Umlaufreaktor (Durchmesser des Reaktionskessels ca. 3 m, gesamtes Nutzvolumen ca. 20 m$^3$) wurden stündlich 2630 kg 95 %ige technische Schwefelsäure mit einer Temperatur von 15°C sowie 1200 kg Siedesalz und 300 kg Industriesalz (gebrochenes Steinsalz mit Reingehalt 95.1 % NaCl) eingetragen. Die Temperatur der Natriumhydrogensulfatschmelze wurde durch Verbrennung von 300 m$^3$ pro Stunde Wasserstoff mit Luft im Tauchbrenner bei 260°C gehalten. Stündlich wurden 3000 kg Schmelze ausgetragen. Wegen der starken Schaumbildung im Reaktor, die auch durch einen schnellaufenden Rührer nicht unterdrückt wurde, konnte die Durchsatzleistung nicht erhöht werden.

Anschließend wurde erfindungsgemäß die technische Schwefelsäure mittels eines Wärmetauschers aus Tantal auf 135°C vorgewärmt. Bei gleichem Mengendurchsatz und gleicher Schmelztemperatur (260°C) wurde dem Tauchbrenner nur noch ca. 230 m$^3$ Wasserstoff pro Stunde zugeführt. Die Schaumbildung im Umlaufreaktor ließ erheblich nach und die Leistung der Anlage konnte nach Erhöhung der Einsatzstoffmengen und der Wasserstoffmenge für den Tauchbrenner auf die ursprünglichen 300 m$^3$ pro Stunde um ca. 27 % entsprechend einer Durchsatzleistung auf 3800 kg Natriumhydrogensulfat pro Stunde verbessert werden.

Beispiel 2

Es wurde wie in Beispiel 1 (mit Vorwärmung der Schwefelsäure) gearbeitet. Zusätzlich wurde auch die Mischung aus Siedesalz und Industriesalz mittels einer mit Hochdruckdampf beheizten Transportschnecke auf 150°C vorgewärmt wurde. Bei mäßiger Schaumbildung im Reaktor und gleicher Heizleistung des Tauchbrenners und gleicher Schmelze-Temperatur war es möglich, 4200 kg Natriumhydrogensulfatschmelze pro Stunde zu erzeugen.

Beispiel 3

Im Umlaufreaktor von Beispiel 1 werden stündlich 2900 kg technische Schwefelsäure sowie 1230 kg Industriesalz und 1000 kg Natriumsulfat (Reingehalt 99.1 % $Na_2SO_4$) eindosiert. Die Schwefelsäure wurde durch Wärmetausch mit der ablaufenden Natriumhydrogensulfatschmelze (Tantalwärmetauscher), 3 $m^2$ Fläche) auf 90°C erwärmt. Industriesalz und Natriumsulfat wurden auf 100°C vorgewärmt. Bei Verbrennung von 310 $m^3$/Stunde Wasserstoff mit Luft betrug die Temperatur der Schmelze im Reaktor 260°C und nach Wärmetausch mit der Schwefelsäure 210°C. Stündlich wurden 4000 kg Natriumhydrogensulfat bei mäßiger Schaumbildung im Reaktor erzeugt.

PATENTANSPRÜCHE:

1. Verfahren zur kontinuierlichen Herstellung von Natriumhydrogensulfat durch Eintragen von Natriumchlorid
oder Natriumsulfat sowie Schwefelsäure in geschmolzenes
Natriumhydrogensulfat und gleichzeitiges Beheizen
der Schmelze und Abziehen der Schmelze aus dem Reaktionsgefäß, dadurch gekennzeichnet, daß man die Ausgangsmaterialien vor dem Eintragen in die Schmelze
mindestens teilweise vorwärmt.

2. Verfahren nach Anspruch 1, dadurch gekennzeichnet,
daß die Schwefelsäure in Wärmetauschern auf Temperaturen bis zu 300°C, vorgewärmt wird.

3. Verfahren nach Anspruch 2, dadurch gekennzeichnet,
daß die Schwefelsäure durch Wärmetauscher mit der aus
dem Reaktionsgefäß ablaufenden Natriumhydrogensulfat-
Schmelze vorgewärmt wird.

4. Verfahren nach Anspruch 1, dadurch gekennzeichnet,
daß man die eingetragenen Natriumsalze auf Temperaturen bis zu 1000°C, vorzugsweise 150 bis 400°C
vorwärmt.

EUROPÄISCHER RECHERCHENBERICHT

0084337

Nummer der Anmeldung

EP 83 10 0150

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-C- 546 491 (FRISHER) <br> * Seite 1, Zeilen 45-48 * | 1 | C 01 D 5/02 |
| X | FR-A- 817 560 (I.G.FARBENINDUSTRIE) <br> * Seite 1, Zeilen 29-56 * | 1,2,4 | |
| X | GB-A- 172 010 (MORITZ) <br> * Seite 2, Zeilen 53-59 * | 1 | |

RECHERCHIERTE SACHGEBIETE (Int. Cl. ³)

C 01 D 5/02

Der vorliegende Recherchenbericht wurde für alle Patentansprüche erstellt.

| Recherchenort <br> DEN HAAG | Abschlußdatum der Recherche <br> 15-04-1983 | Prüfer <br> VAN BELLINGEN I. |
|---|---|---|